# EUROPEAN PATENT SPECIFICATION

(11) **EP 1 928 145 B1**
(45) Date of publication and mention of the grant of the patent: **24.04.2013**
(21) Application number: 07022171.8
(22) Date of filing: 15.11.2007
(51) Int. Cl.: H04L 29/06, G06F 21/00, G06Q 10/00

(54) **Self-operating security platform**
Autonome Sicherheitsplattform
Plateforme de sécurité autonome

(30) Priority: 28.11.2006 US 564210
(43) Date of publication of application: 04.06.2008
(73) Proprietor: Avaya Inc., Basking Ridge, NJ 07920 (US)
(72) Inventor: Baker, Albert J., Brick, New Jersey 08724 (US); Block, Frederick Peter, Westminster, CO 80031 (US); Scaria, Lincy, Union, NJ 07083 (US); Schell, Scott Allan, Westminster, CO 80031 (US)
(74) Representative: Kampfenkel, Klaus

(56) References cited:
- US-A- 5 960 404
- US-A1- 2005 043 961
- US-A1- 2006 259 341

## Description

### Field of the Invention

The present invention relates to telecommunications in general, and, more particularly, to a workflow script-based security platform that is well-suited for telecommunications devices.

### Background of the Invention

Modem telecommunications systems comprise networks that switch or route data packets between endpoint devices with the assistance of other devices such as servers, routers, and so forth. The networks include the Internet, Internet Protocol-based broadband networks (both private and public), local area networks (LAN), and so forth. The endpoint devices come in a variety of forms such as a standalone telephone, a notebook computer, a personal digital assistant (PDA), a tablet computer, and so forth, and operate In accordance with packet-based protocols such as Internet Protocol (IP), Session Initiation Protocol (SIP), and H.323 protocol. The endpoints are capable of originating outgoing calls and receiving incoming calls and are further capable of one or more communication modes that comprise voice, audio, video, data, email, instant messaging, and chat. The servers are data-processing systems that fulfill, for example, call-processing requests from the telecommunications endpoints and also perform other tasks that are essential to the telecommunications system.

There are certain attributes of these telecommunications systems that make them unique. First, their architecture is such that the functionality provided is typically distributed across the devices present, rather than being centralized in a small subset of devices. Second, many of the devices are able to communicate with many other devices in the system. Third, the processing speed of these devices often has to be fast enough to accommodate the real-time nature of certain communication modes such as voice, video, and instant messaging. And fourth, certain components that are present, such as the Internet, are freely accessible by anyone with a computer or other communication device, or at least are more accessible than their counterparts in an earlier-generation, Plain Old Telephone Service (POTS) network.

Some of the aforementioned attributes consequently make it easier for an intruder to access a telecommunications system than ever before. For example, referring to the point made in the previous paragraph about increased accessibility, many of the endpoints are softphones which, by nature, can be accessed in a way similar to how a personal computer can be accessed. The problem with a softphone being present is that an intruder has the capability to introduce malicious software, or "malware," into the softphone without the user's knowledge. The malware (*e.g*., a computer virus, *etc*.) introduced could be used by the intruder for toll fraud by instructing the softphone to call the telephone number of the intruder's choice and by controlling the malware via instructions from an external server to which the malware connects. Itis not surprising that intruders are increasingly targeting telecommunications systems with a wide variety of security attacks.

There are problems associated with applying some security-related, prior art techniques to a telecommunications system. One problem with some existing prior art techniques in providing security to telecommunications devices is in the monitoring aspect of security. Monitoring a real-time telecommunications device, in contrast with a non-time critical device, requires more than merely setting up a few characteristics to look for and then triggering notifications to a security team when the established criteria are met. One problem with this prior art approach to monitoring is that the triggers would be quickly over-executed for false positives. A second problem with some existing prior art techniques is in the correctional aspect of security—that is, in fixing the problem. With the vast amount of data related to system interactions and potential problems that might have occurred to create vulnerabilities, correcting a security problem can be a time-consuming process. For example, the data must be collected and analyzed, tests must be run to verify the vulnerability, and then steps must be taken to secure the system. Often, this occurs after the security vulnerability has already been exploited and the system compromised.

What is needed is a technique for autonomously and responsively providing for the security of telecommunications devices, without some of the disadvantages in the prior art.

The US 2006259341 describes an exception handling system and method for dynamically recovering from a workflow exception occurring in a mobile network communication system. The system has multiple workflows and at least one mission critical item. An attack tree modeling analyses is performed to identify the mission critical item. Another operation includes writing a plurality of forward recovery rules to protect the mission critical item using a transaction datalog fragment of transaction logic. The recovery rules are enabled through an engine in communication with the mobile network communication system. The multiple workflows are monitored for indication of a system attack on any one of the multiple workflows. A new workflow is automatically generated upon detection of the system attack. The exception handling system is overlayed on the mobile network.

### Summary of the Invention

The present invention enables security monitoring and protection across a plurality of related telecommunications devices. In accordance with the illustrative embodiment, the self-operating security platform of the present invention is based on a collection of security adapters that are tied together into a service-oriented environment and are coupled with an orchestration engine that loads and executes workflow scripts. Workflow scripts have been used for business applications, but their usage in real-time telecommunications devices is relatively new.

The security adapters and orchestration engine of the illustrative embodiment are present across one or more of the telecommunications devices themselves. Each security adapter monitors a different aspect of the system for intrusions or other security threats, The specific security protection rules are taught to the security platform in a basic profile; as the security platform runs, it builds up the actual profile of how the telecommunications device performs in a normal state. In other words, the security platform of the illustrative embodiment "composes" and executes new workflow scripts from basic workflow scripts, based on security status indications received, the execution states, and the run-time behavior of the telecommunications device being protected. The task of building the actual profile can be considered a long-running, self-expanding workflow that executes in the orchestration engine. The self-expanding nature of the workflow enables the telecommunications device to leam the behavioral patterns of its user or users.

The security platform of the illustrative embodiment is advantageous of some techniques in the prior art for a couple of reasons. First, the security platform collects data and acts on the data for the majority of security incidents, thereby removing the burden from security experts of having to search through and correlate the data, and manually try to fix the problems. Second, the collecting of data happens during potential security attacks, so the telecommunications device being protected becomes more secure as it hardens itself. This is superior to requiring an investigation after the fact on how a device was compromised.

The illustrative embodiment of the present invention comprises: monitoring a security status of a first element of a first data-processing system; detecting that an intrusion has occurred that targeted the first element; and composing a third workflow script from a first portion of a first workflow script and a second portion of a second workflow script, based on the security status and on the detection.

### Brief Description of the Drawings

Figure 1 depicts telecommunications system 100 in accordance with the illustrative embodiment of the present invention.
Figure 2 depicts the salient components of call-processing server 102-*m* of telecommunications system 100.
Figure 3 depicts the salient software components of security platform 300 that is resident at call-processing server 102-*m*.
Figure 4 depicts a flowchart diagram of the salient tasks performed by security platform 300 of call-processing server 102-*m*, in accordance with the illustrative embodiment of the present invention.

### Detailed Description

The following terms are defined for use in this Specification, including the appended claims:
- The term "**call**," and its Inflected forms, is defined as a communication of user information between two or more telecommunications terminals. Examples of a call are a voice telephone call (including interactive voice response [NR] sessions), an emailing, a text-based instant message [IM] session, a video conference, and so forth. In a Session Initiation Protocol (or "SIP") context, a call is a type of session.
- The term "**script,**" and its inflected forms, is defined as a computer program that is interpreted (*i.e.*, translated at run-time), instead of being compiled ahead of time. A script is based on a scripting language, which might be a general-purpose programming language or might be limited to specific functions that are used to augment the running of an application. A well-known example of such a scripting language is JavaScript. In the illustrative embodiment, the language has constructs for execution, definitions of software modules (such as the security adapters) that a script might invoke or have access to, and definitions of the data that a script expects back from a software module.
- The term "**workflow,**" and its inflected forms, refers to the automation of a process, during which information or tasks are passed from one processing component to another for action, according to a set of procedural rules. It describes how tasks are structured, which components perform them, what their relative order is, how they are synchronized, how information flows to support the tasks, and how tasks are tracked. A workflow can be defined in the form of a "**workflow script.**"

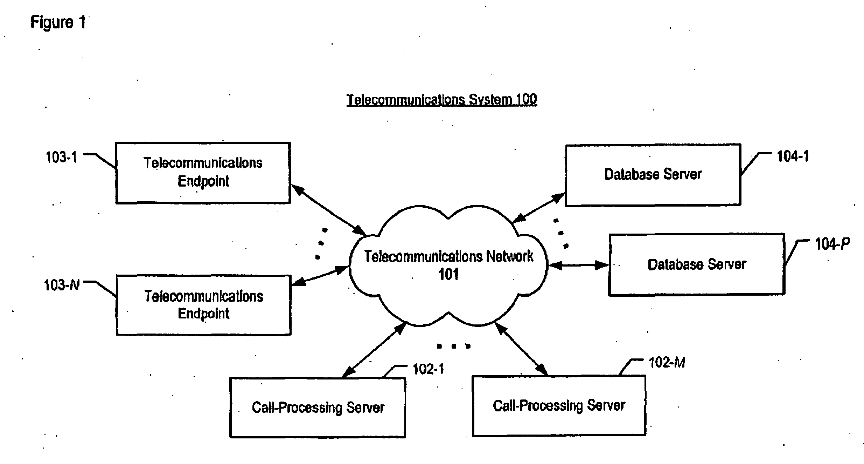

Figure 1 depicts telecommunications system 100 in accordance with the illustrative embodiment of the present invention. System 100 is a group of interactive components that perform telecommunications-related functions; system 100 comprises telecommunications network 101; call-processing servers 102-1 through 102-*M*, wherein *M* is a positive integer; telecommunications endpoints 103-1 through 103-*N*, wherein *N* is a positive integer; and call-control database servers 104-1 through 104-*P*, wherein *P* is a positive integer, interconnected as shown. System 100 is capable of the switching and transmission of media signals (*e.g.*, voice, audio, video, *etc.*) and call-control signals, as are well-known in the art.

Telecommunications network 101 is a telecommunications network that comprises one or more of the Internet, the Public Switched Telephone Network (PSTN), a local area network (LAN), and so forth. Network 101 comprises or is connected to one or more transmission-related nodes such as gateways, routers, or switches that are used to direct data packets from one or more sources to the correct destinations of those packets. Network 101 is capable of handling, in well-known fashion, Internet Protocol-based messages that are transmitted among two or more Internet Protocol-capable processing systems such as between call-control database servers 104-1 through 104-*P* and call-processing servers 102-1 through 102-*M*, between call-processing servers 102-1 through 102-*M* and endpoints 103-1 through 103-*N*, and so forth.

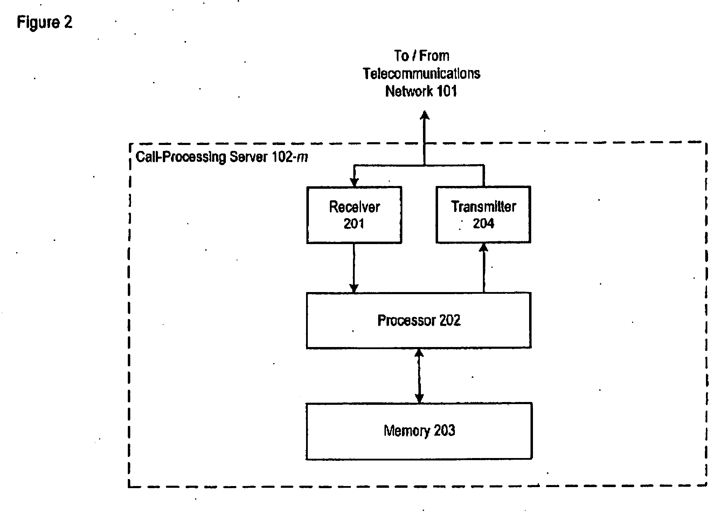

Call-processing server 102-*m*, for *m*=1 through *M*, is a data-processing system that fulfills call-processing requests from its telecommunications endpoint users, as well as from other users. For example, server 102-*m* is capable of reading in and analyzing the dialed digits from telecommunications endpoint 103-*n*, and well as processing the corresponding call initiation request. Call-processing server 102-*m* is also capable of receiving, from one or more of database servers 104-1 through 104-*P*, call-control rules that server 102-*m* uses to initiate calls and subscriber-related information about telecommunications endpoints 103-1 through 103-*N* and their users. The salient components that enable call-processing server 102-*m* to perform telecommunications functions such as call initiation are described below and with respect to Figure 2. It will be clear to those skilled in the art, after reading this specification, how to make and use call-processing server 102-*m*.

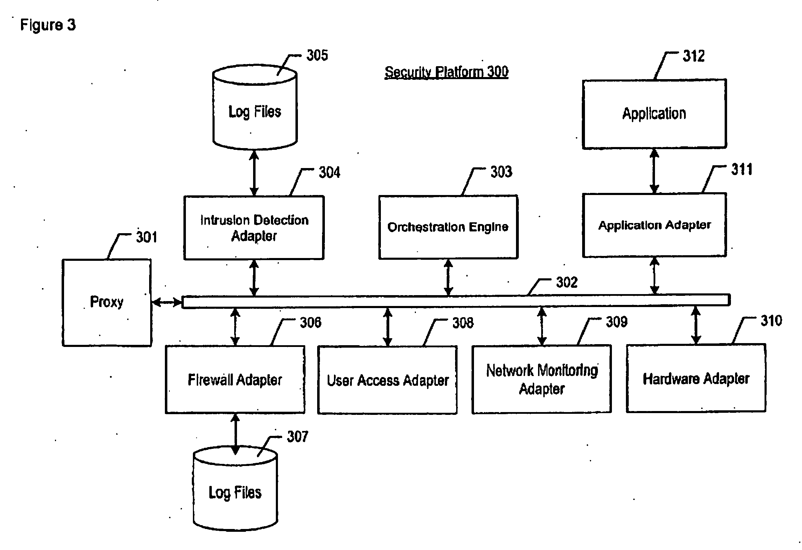

In accordance with the illustrative embodiment of the present invention, call-processing server 102-*m* is further capable of executing workflow scripts as part of a self-operating security platform. The components that constitute the security platform are described below and with, respect to Figure 3. As those who are skilled in the art will appreciate, after reading this specification, the security platform of the illustrative embodiment can be implemented in one or more components of telecommunications system 100, in various combinations.

Telecommunications endpoint 103-*n*, for *n*=1 through *N*, is a communications device such as an Internet Protocol-based endpoint, a Session Initiation Protocol-based (SIP-based) endpoint, and an H.323 endpoint, and can be in a variety of forms such as a standalone telephone, a notebook computer, a personal digital assistant (PDA), a tablet computer, and so forth. The endpoints are capable of originating outgoing calls and receiving incoming calls, In well-known fashion. In addition, each endpoint is capable of one or more communication modes that comprise, but are not limited to voice, audio, video, data, email, instant messaging, and chat. It will be clear to those skilled in the art, after reading this specification, how to make and use telecommunications endpoint 103-1 through 103-*N*.

Call-control database server 104-*p*, for *p*=1 through *P*, is a data-processing system that fulfills database access requests from its users such as call-processing server 102-*m*. Each database server is capable of acquiring and maintaining call-control rules and subscriber information, in well-known fashion. It will be clear to those skilled in the art, after reading this specification, how to make and use call-control database servers 104-1 through 104-*P*.

Figure 2 depicts the salient components of call-processing server 102-*m* in accordance with the illustrative embodiment of the present invention. Server 102-*m* comprises receiver 201, processor 202, memory 203, and transmitter 204, interconnected as shown.

Receiver 201 is an interface that receives signals from other nodes (*e.g.*, telecommunications endpoint 103-*n*, database server 104-*p*, *etc*.) via network 101 and forwards the information encoded in the signals to processor 202, in well-known fashion. It will be clear to those skilled in the art, after reading this specification, how to make and use receiver 201.

Processor 202 is a general-purpose processor that is capable of receiving information from receiver 201, executing instructions stored in memory 203, reading data from and writing data into memory 203, executing the tasks described below and with respect to Figure 5, and transmitting information to transmitter 204. In some alternative embodiments of the present invention, processor 202 might be a special-purpose processor. In either case, it will be clear to those skilled in the art, after reading this specification, how to make and use processor 202.

Memory 203 stores the instructions and data used by processor 202. Memory 203 might be any combination of dynamic random-access memory (RAM), flash memory, disk drive memory, and so forth. It will be clear to those skilled in the art, after reading this specification, how to make and use memory 203.

Transmitter 204 is an interface that receives information from processor 202 and transmits signals that encode this information to other nodes (*e.g.*, telecommunications endpoint 103-*n*, database server 104-*p*, *etc*.) via network 101, in well-known fashion. It will be clear to those skilled in the art, after reading this specification, how to make and use transmitter 204.

Figure 3 depicts the salient software components of security platform 300 that is resident at call-processing server 102-*m*, in accordance with the illustrative embodiment of the present invention, Platform 300 is based on a distributed collection of security adapters that are tied together into an internal, service-oriented environment that is coupled with an intelligent orchestration engine. Each security adapter monitors a different aspect of the system for intrusions or other security threats. In particular, security platform 300 comprises proxy 301, message bus 302, orchestration engine 303, intrusion detection adapter 304, log file database 305, firewall adapter 306, log file database 307, user access adapter 308, network monitoring adapter 309, hardware adapter 310, application adapter 311, and application 312, interrelated as shown.

Proxy 301 is responsible for abstracting the bindings between adapters 304, 306, and 308 through 311, and orchestration engine 303. The abstracting enables the adapters to be added to or removed from server 102-*m* dynamically at run-time without taking the system out of service. Proxy 301 routes a received request for a security-related function to the appropriate security adapter or orchestration engine, based on metadata criteria expressed by the state in the received request.

Message bus 302 connects the other components of security platform 300 together. In particular, bus 302 enables the transmission of messages among proxy 301, orchestration engine 303, and the adapters, in well-known fashion. In some embodiments, including the illustrative embodiment, bus 302 is based on the Java Message Service (JMS), as is known in the art.

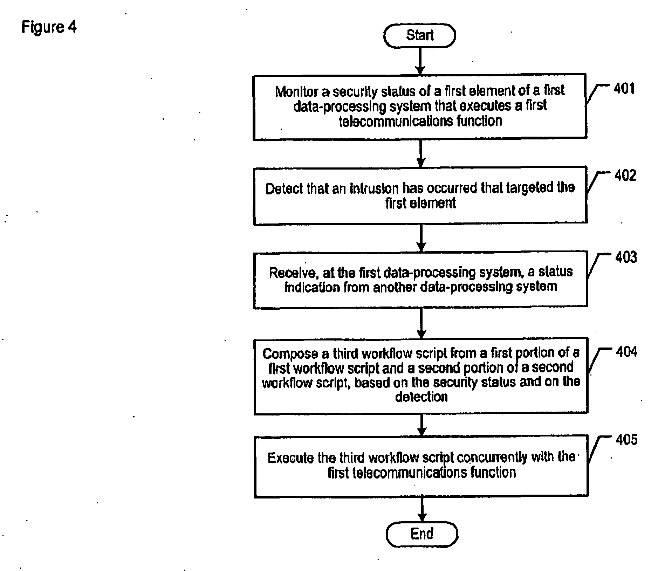

Orchestration engine 303 receives information from proxy 301, executes the tasks described below and with respect to Figures 4 and 5, and transmits information to proxy 301.

Intrusion detection adapter 304 performs intrusion detection, in concert with a system such as "Tripwire on Linux,' which typically writes to a log file when there is a problem. In particular, adapter 304 monitors logs writes in log file database 305 and searches for specific information contained in the log file that matches the profile in orchestration engine 303.

Firewall adapter 306 monitors the logs of attempts at unauthorized or illegal entry and use of unauthorized or unsecured services at call-processing server 102-*m*, where the log is written to a log file in database 307 by the firewall of server 102-*m*. Adapter 304 passes the information about the log writes to orchestration engine 303.

User access adapter 308 monitors for and notifies engine 303 about unauthorized file access attempts, repeated login failures, and unfamiliar login "source hosts."

Application adapter 311 monitors and reports on application-specific logs (*e.g.*, related to application 312, *etc.*) and other system logs that match the security states within the workflow being executed.

Network monitoring adapter 309 provides for data compilation of application output (*i.e.*, to a log) for unexpected packets, packet rates, or malformed packets, any of which can indicate that a denial of service attack is under way.

Hardware adapter 310 is intended to ensure that no inappropriate "hot swaps" occur of the companion hardware component. This is particularly applicable for smartcards or other security-specific devices. As those who are skilled in the art will appreciate, there can be multiple hardware driver adapters (*i.e.*, one for each hardware device),

Security platform 300, in accordance with the illustrative embodiment, is depicted as comprising software components that are connected via a message bus and that co-exist within the same data-processing system (*i.e.*, call-processing server 102-*m*). As those who are skilled in the art will appreciate, in some alternative embodiments, some all or of the depicted software components can span multiple, physically-distinct, data-processing systems that are connected together (*e.g.*, via a local-area network, *etc.*).

Each adapter of platform 300 presents the information it gathers to orchestration engine 303, which maps that information to finite state machines. The finite state machines describe the behavior of securing the system via moving from state to state based on the information that is received. For example, at the first indication that something is out of place, such as an unauthorized user trying to access the system, platform 300 may move from the current state to a heightened monitoring state. If security threats are identified in other areas, platform 300 may then move from the heightened monitoring state to a securing state where the system takes steps specifically to lock the unauthorized user out of the system, to shut down non-essential services, and to operate with minimal functionality until the security threat has been avoided.

Additionally, orchestration engine 303 can be given long-running profiles that are base profiles to be studied, learned, and expanded upon over time based on the usage of the system. For example, if no one logs into the system between 2 AM and 3 AM, platform 300 will recognize that behavior over time as additional criteria in the workflow processing. Then, if a login occurs at 2:30 AM, platform 300 will trigger a higher alert than It would at another time. In accordance with the illustrative embodiment, this is accomplished with minimal, non-compiled instructions that are sent to and executed by orchestration engine 303, such as in the form of an Extensible Markup Language-based (XML-based) script as is known in the art.

Figure 4 depicts a flowchart diagram of the salient tasks performed by security platform 300 of call-processing server 102-*m*, in accordance with the illustrative embodiment of the present invention. As those who are skilled in the art will appreciate, some of the events that appear in Figure 4 can occur in parallel or in a different order than that depicted.

At task 401, platform 300 continually monitors a security status of a first element of a first data-processing system (*i.e.,* call processing server 102-*m*) that executes one or more software modules. At least some of the software modules perform one or more telecommunications functions (*e.g.*, initiating and maintaining calls, *etc.*) and utilize the monitored element in the course of being executed. For example, intrusion detection adapter 304 monitors log files In database 305 to see if a log write has occurred that would suggest an access attempt. In some alternative embodiments, the monitoring takes place at a data-processing system that is physically distinct from the first data-processing system, such as database server 104-2, telecommunications endpoint 103-3, another call-processing server, and so forth.

At task 402, platform 300 detects that an intrusion has occurred that targeted the element that is being monitored.

At task 403, orchestration engine 303 of platform 300 receives a status Indication from the monitoring component. For example, the status indication might indicate that an intrusion has occurred or the indication might merely provide pertinent information that orchestration engine 303 will process further.

In accordance with the illustrative embodiment, engine 303 is further capable of receiving additional status indications from various sources. For example, a different status indication than the first might indicate, or at least suggest, that a denial of service attack is occurring, as received from network monitoring adapter 309.

At task 404, orchestration engine 303 composes a third workflow script by merging at least a portion of a first workflow script with at least a portion of a second workflow script, as well as with possibly additional scripts. The composition of the third workflow script is based on the security status reported in or inferred from the received status indication or indications. In some embodiments, the workflow script can also be based on the state of one or more software modules, such as those modules that are performing telecommunications functions or those performing security-related tasks.

In some embodiments, the workflow scripts are Extensible Markup Language-based (XML-based). It will be clear to those skilled in the art, however, how to make and use embodiments of the present invention in which the scripts are based on a language other than XML. Moreover, as those who are skilled in the art will appreciate, the merging of two or more portions of scripts can be performed independently of the form of those scripts.

At task 405, orchestration engine 303 executes the third workflow script to address the security issue. In accordance with the illustrative embodiment, the script can be executed concurrently with the telecommunications functions also being processed at call-processirig server 102-*m*. The execution of the workflow script results in a corrective action taking place, such as changing an access permission of a log file (or other computer file) or reverting to an earlier version of a computer file,

For example, orchestration engine 303 might be tracking 100. different types of security attacks, along with the 50 different ways that the security attacks can be combined. Each type of security attack is represented in platform 300 as a different workflow script. Engine 303 dynamically loads different sets of the workflow scripts; composes a new workflow script by combining the individual, loaded workflow scripts and based, in part, on the possible combinations being tracked; and executes the new script to handle a particular combination of attacks that is consistent with the particular security situation. These "on-demand" workflow scripts deal with, in particular, spontaneous security issues that arise.

As a second example, two workflow scripts are stored as part of security platform 300: a first script that looks for unsuccessful logins and a second script that logs all access for a particular Internet Protocol (IP) address. At some preset threshold, the first script takes the originating IP address of the access attempts and inserts the address as the monitor target in the second script, thereby creating a new, third script that platform 300 executes. The third script might also be able to recognize certain access patterns and, in turn, might eventually escalate the "log all access" action to a "deny all access" action.

As a third example, which is related to the second example, a fourth workflow script monitors the actions of the third script, as well as others, by looking at the access logs for the all of the IP addresses that end up completely denied. If the fourth script detects a set number of occurrences (*e.g.*, three occurrences, *etc.*) of the same access pattern resulting in a blocked IP address, the fourth script creates a fifth script that looks for this access pattern and immediately denies access to the originating IP address, without platform 300 having to detect the address via the third script.

Orchestration engine 303 is further capable of executing other types of workflow scripts of different origins. For example, engine 303 can execute a workflow script that is not necessarily composed of two or more scripts. As another example, engine 303 can execute a workflow script that acquires the current secure state of each component and aspect of the data-processing system that is being protected (*i.e.,* server 102-*m*). As a third example, engine 303 can execute a workflow script that enables the software components of the protected system to interact with the security functions, such as when those components need to access computer files during the normal course of providing the intended telecommunications functionality to valid users. As those who are skilled in the art will appreciate, engine 303 is also capable of executing other "long-standing" workflow scripts, in addition to these examples.

It is to be understood that the above-described embodiments are merely illustrative of the present invention and that many variations of the above-described embodiments can be devised by those skilled in the art without departing from the scope of the invention. For example, in this Specification, numerous specific details are provided in order to provide a thorough description and understanding of the illustrative embodiments of the present invention. Those skilled in the art will recognize, however, that the invention can be practiced without one or more of those details, or with other methods, materials, components, *etc*.

Furthermore, in some instances, well-known structures, materials, or operations are not shown or described in detail to avoid obscuring aspects of the illustrative embodiments. It is understood that the various embodiments shown in the Figures are illustrative, and are not necessarily drawn to scale. Reference throughout the specification to "one embodiment" or "an embodiment" or "some embodiments" means that a particular feature, structure, material, or characteristic described in connection with the embodiment(s) is included in at least one embodiment of the present invention, but not necessarily all embodiments. Consequently, the appearances of the phrase "in one embodiment," "in an embodiment," or "in some embodiments" in various places throughout the Specification are not necessarily all referring to the same embodiment. Furthermore, the particular features, structures, materials, or characteristics can be combined in any suitable manner in one or more embodiments. It is therefore intended that such variations be included within the scope of the following claims and their equivalents.

## Claims

1. A method comprising:
monitoring a security status of a first element of a first data-processing system;
detecting that an intrusion has occurred that targeted said first element;
composing a third workflow script from a first portion of a first workflow script and a second portion of a second workflow script, based on said security status and on said detection; and
executing said third workflow script.

2. The method of claim 1 wherein said intrusion constitutes the accessing of a computer file without authorization.

3. The method of claim 2, wherein the execution results in an access permission of said computer file being changed.

4. The method of claim 2, wherein the execution results in reverting to an earlier version of said computer file.

5. The method of claim 1 wherein said first element is a log file.

6. The method of claim 1 wherein said first workflow script represents a first type of security attack.

7. The method of claim 6 wherein said second workflow script represents a second type of security attack, and wherein the composition of said third workflow script is based on a rule about how said first type of security attack and said second type of security attack are combined.

8. The method of claim 1 wherein said security status is monitored by a second data-processing system that is physically distinct from said first data-processing system.

9. The method of claim 8 wherein said first data-processing system performs a first telecommunications function and wherein said second data-processing system performs a second telecommunications function.

## Patentansprüche

1. Verfahren, umfassend:
Überwachen eines Sicherheitsstatus eines ersten Elements eines ersten Datenverarbeitungssystems;
Erkennen, dass ein Eindringen vorgekommen ist, das auf das erste Element abzielte;
Zusammensetzen eines dritten Workflow-Skripts aus einem ersten Abschnitt eines ersten Workflow-Skripts und einem zweiten Abschnitt eines zweiten Workflow-Skripts basierend auf dem Sicherheitsstatus und auf der Erkennung, und
Ausführen des dritten Workflow-Skripts.

2. Verfahren nach Anspruch 1, wobei das Eindringen den Zugriff auf eine Computerdatei ohne Berechtigung dazu darstellt.

3. Verfahren nach Anspruch 2, wobei das Ausführen dazu führt, dass eine Zugangsberechtigung für die Computerdatei geändert wird.

4. Verfahren nach Anspruch 2, wobei das Ausführen zu einem Rückgriff auf eine frühere Version der Computerdatei führt.

5. Verfahren nach Anspruch 1, wobei das erste Element eine Protokolldatei ist.

6. Verfahren nach Anspruch 1, wobei das erste Workflow-Skript eine erste Art von Angriff auf die Sicherheit darstellt.

7. Verfahren nach Anspruch 6, wobei das zweite Workflow-Skript eine zweite Art von Angriff auf die Sicherheit darstellt, und wobei die Zusammensetzung des dritten Workflow-Skripts auf einer Regel dazu basiert, wie die erste Art von Angriff auf die Sicherheit und die zweite Art von Angriff auf die Sicherheit kombiniert werden.

8. Verfahren nach Anspruch 1, wobei der Sicherheitsstatus durch ein zweites Datenverarbeitungssystem überwacht wird, das physisch von dem ersten Datenverarbeitungssystem getrennt ist.

9. Verfahren nach Anspruch 8, wobei das erste Datenverarbeitungssystem eine erste Telekommunikationsfunktion ausführt und wobei das zweite Datenverarbeitungssystem eine zweite Telekommunikationsfunktion ausführt.

## Revendications

1. Procédé consistant à :
surveiller un état de sécurité d'un premier élément d'un premier système de traitement de données ;
détecter qu'une intrusion ayant ciblé ledit premier élément s'est produite ;
composer un troisième script de flux de travaux à partir d'une première partie d'un premier script de flux de travaux et d'une deuxième partie d'un deuxième script de flux de travaux sur la base dudit état de sécurité et de ladite détection ; et
exécuter ledit troisième script de flux de travaux.

2. Procédé selon la revendication 1, dans lequel ladite intrusion consiste à accéder à un fichier informatique sans autorisation.

3. Procédé selon la revendication 2, dans lequel l'exécution conduit à une modification d'une permission d'accès audit fichier informatique.

4. Procédé selon la revendication 2, dans lequel l'exécution conduit à un retour à une version antérieure dudit fichier informatique.

5. Procédé selon la revendication 1, dans lequel ledit premier élément est un fichier journal.

6. Procédé selon la revendication 1, dans lequel ledit premier script de flux de travaux représente un premier type d'attaque de sécurité.

7. Procédé selon la revendication 6, dans lequel ledit deuxième script de flux de travaux représente un deuxième type d'attaque de sécurité et dans lequel la composition dudit troisième script de flux de travaux est fondée sur une règle concernant la façon dont ledit premier type d'attaque de sécurité et ledit deuxième type d'attaque de sécurité sont combinés.

8. Procédé selon la revendication 1, dans lequel ledit état de sécurité est surveillé par un deuxième système de traitement de données qui est physiquement distinct dudit premier système de traitement de données.

9. Procédé selon la revendication 8, dans lequel ledit premier système de traitement de données exécute une première fonction de télécommunication et dans lequel ledit deuxième système de traitement de données exécute une deuxième fonction de télécommunication.
